(19)

Europäisches
Patentamt
European
Patent Office
Office européen
des brevets

(11) **EP 2 014 714 A1**

(12) **EUROPEAN PATENT APPLICATION**

(43) Date of publication:
**14.01.2009 Bulletin 2009/03**

(21) Application number: **07013623.9**

(22) Date of filing: **11.07.2007**

(51) Int Cl.:
***C08L 23/10*** (2006.01)          ***C08L 23/14*** (2006.01)
***C08L 23/16*** (2006.01)

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Borealis Technology Oy
06101 Porvoo (FI)**

(72) Inventors:
• **Malm, Bo
02110 Espoo (FI)**
• **Tuominen, Olli
00930 Helsinki (FI)**

(74) Representative: **Grünecker, Kinkeldey,
Stockmair & Schwanhäusser
Anwaltssozietät
Leopoldstrasse 4
80802 München (DE)**

(54) **Heterophasic polyolefin composition**

(57)    The present invention provides a polyolefin composition comprising:
(a) a propylene homopolymer component (A), and
(b) a propylene random copolymer component (B) comprising repeating units derived from at least one comonomer selected from the group consisting of ethylene and α-olefin monomers,

wherein the random propylene copolymer component (B) has an MFR2 of from 0.5 to 15, and wherein the propylene homopolymer component (A) may comprise up to 1-wt% of at least one comonomer selected from the group consisting of ethylene and α-olefin monomers, and wherein the MRF2 ratio of component (A)/component (B) is equal to or greater than 5.

The present invention further provides a heterophasic polyolefin composition comprising a mixture of the above polyolefin composition as the matrix phase, and a rubber component dispersed therein.

EP 2 014 714 A1

## Description

The invention relates to a polyolefin composition comprising a random propylene copolymer component and a homopropylene polymer component, further to a heterophasic polyolefin composition comprising said polyolefin composition as matrix and an additional rubber component, and to a process for producing same.

## Description of the prior art

Heterophasic polyolefin compositions are generally employed in applications where soft polymers are desired. Soft heterophasic polypropylene copolymer compositions are usually produced by preparing a polypropylene copolymer matrix and adding thereto an amorphous elastomeric component to achieve lower stiffness.

Such heterophasic propylene polymers are typically chosen for their high impact strength, which makes them especially suitable for applications such as injection molding for thin-wall packaging and food packaging. Other application areas include automotive parts formed by injection molding.

A suitable soft heterophasic material includes an ethylene/propylene copolymer matrix having a relatively high amount of rubber so as to achieve a stiffness of 500 MPa or lower. However, known heterophasic materials with a stiffness of 500 MPa or less suffer from negative effects on the impact resistance. Further, very low stiffness cannot be achieved by only increasing the rubber content. Moreover, said material is prone to fogging, which is disadvantageous in some applications.

Designing tailored polymer compositions can be challenging since many polymer properties are directly or indirectly interrelated. It is, for example, difficult to combine a low stiffness of a polymer composition with a high melting temperature. EP-A-991719 discloses a propylene copolymer having a tensile modulus of 420 MPa or less. However, while said tensile modulus might be desirable, the melting temperature of said material is still undesirably low for some applications.

EP 0 894 102 A2 describes a polyolefin composition comprising a random copolymer and a homopolymer. The random copolymer has a MFR2 of below 0.4 (g/10min) in order to achieve good creep properties. EP 0 785 954 A2 describes olefin copolymers which may comprise a random copolymer component having a very low MFR2, such as 0.005 (g/10min). EP 1270628 A2 discloses a process for producing a propylene random copolymer

## Object of the present invention

Accordingly, it is an object of the present invention to provide a polyolefin composition overcoming the drawbacks of the prior art, and in particular compositions having a low stiffness accompanied by a high melting temperature.

## Brief description of the present invention

The present invention solves the above object by providing a polyolefin composition according to claim 1. Said polyolefin composition may be mixed with a rubber component so as to form a heterophasic polyolefin composition as defined in claim 17. Preferred embodiments are outlined in the subclaims and also in the following specification. Further the present invention provides processes for preparing the polyolefin composition and the heterophasic polyolefin composition as well as moulded articles comprising the polyolefin composition and the heterophasic polyolefin composition, as outlined in the claims and further explained in the following specification.

The heterophasic polyolefin composition of the present invention exhibits a low stiffness together with a high melting temperature and is therefore particularly suitable for the manufacture of films, molded articles, sheets, bottles, panels, foams, pipes, tubes and other molded articles.

## Detailed description of the invention

The present invention provides a polyolefin composition comprising:

(a) a propylene homopolymer component (A), and
(b) a propylene random copolymer component (B) comprising repeating units derived from at least one comonomer selected from the group consisting of ethylene and $\alpha$-olefin monomers,

wherein the propylene random copolymer component (B) has an MFR of from 0.5 to 15, and wherein the propylene homopolymer component (A) may comprise up to 1-wt% of at least one comonomer selected from the group consisting of ethylene and $\alpha$-olefin monomers, and wherein the MRF2 ratio of component (A)/component (B) is equal to or greater than 5.

The expression "propylene random copolymer" as used herein refers to the comonomer in said propylene copolymer being distributed randomly, leading to a statistical insertion within the polymer chain.

The melt flow rate MFR2 of the propylene random copolymer component (B) in the polyolefin composition is preferably from 1 to 14, and in embodiments more preferably from 1 to 2.5, most preferably from 1.2 to 1.7, or in other embodiments from 8 to 14. Such a melt flow rate yields a XS content of component (B) having a high weight average molecular weight (MW), which may be expressed by an IV value of the XS content of component (B) of about 1 dl/g or more. Such a high molecular weight XS content for the component (B) further increases the overall balance of properties for the final composition.

The melt flow rate MFR2 of the propylene homopolymer component (A) is adjusted so that the desired MFR2 ratio is achieved. Suitable examples of MFR2 values for component (A) are at least 80, preferably at least 90, and more preferably at least 100, such as from 95 to 120, and in other embodiments also 5 or more, such as from 5 to 10, preferably from 6 to 8.5. The values depend from the MFR2 value for component (B) and are adjusted in order to meet the requirement concerning the MFR2 ratio. Surprisingly it has been determined that the MFR2 ratio as defined in the present invention enables the preparation of compositions with suitably broad molecular weight distributions without having a detrimental effect on extrudability and mouldability.

The propylene random copolymer component (B) comprises repeating units derived from at least one comonomer selected from the group consisting of ethylene and $\alpha$-olefin monomers. Preferably, said $\alpha$-olefin monomers comprise from 4 to 12 carbon atoms. Examples of suitable $\alpha$-olefin monomers include 1-butene, 1-pentene, 4-methyl-1-pentene, 1-hexene, 1-heptene and 1-octene. In a more preferred embodiment, the propylene random copolymer component (B) is derived from propylene and either ethylene or 1-butene. In a particularly preferred embodiment, the propylene random copolymer component (B) is a random propylene-ethylene copolymer.

In another preferred embodiment, the propylene copolymer random component (B) comprises at least two different comonomers. Suitable comonomers are the same as defined above.

In the propylene random copolymer component (B), the amount of the at least one comonomer selected from the group of ethylene and $\alpha$-olefins is preferably from 1 to 20-wt%, preferably from 1 to 15-wt%, such as from 1 to 12-wt%, more preferably from 2 to 10-wt%, and even more preferably from 5 to 8-wt%, based on the total weight of the random propylene copolymer component (B). It is in particular preferred when the component (B) comprises 5-wt% or more of comonomer, typically 5.5 to 8-wt%. Surprisingly it has been determined that such a comonomer amount results in a high XS content of the component (B) which increases overall performance of the final composition, in particular concerning the desired properties of softness and impact strength.

By adjusting the comonomer content in the propylene random copolymer component (B), it is possible to tailor the stiffness properties (the tensile modulus), and also the impact properties. Generally, a higher comonomer content lowers the stiffness and increases the impact properties.

As indicated above, the composition in accordance with the present invention comprises a propylene homopolymer component (A) which may comprise up to 1-wt% of at least one comonomer selected from the group consisting of ethylene and $\alpha$-olefin monomers, wherein said $\alpha$-olefin monomers comprise from 4 to 12 carbon atoms. Examples of suitable $\alpha$-olefin monomers include 1-butene, 1-pentene, 4-methyl-1-pentene, 1-hexene, 1-heptene and 1-octene. Preferably the comonomer is ethylene.

The component (A) may be a syndiotactic or an isotactic propylene polymer as defined herein, typically component (A) is an isotactic propylene polymer as defined herein, with an isotactic ratio of typically above 0.9, more preferably above 0.95 and in embodiments up to 0.98 or more, such as 0.99 or even 0.995, determined by IR spectroscopy as described in more detail in EP 0 277 514 A2, incorporated herein by reference.

The overall comonomer content for the polyolefin composition comprising component (A) as well as component (B) typically is in the range of from 2.5 to 6-wt% preferably 3 to 5-wt%.

The polyolefin composition of the present invention advantageously exhibits a low stiffness. Preferably, the flexural modulus is not higher than 600 MPa, more preferred 500 MPa, and even more preferred 450 MPa.

The polyolefin composition of the present invention has a high melting temperature. Preferably, the melting temperature ($T_M$) of the polyolefin composition is at least 150°C, preferably at least 154°C, and more preferably at least 160°C. The melting temperature as defined herein refers to the main melting peak as determined by DSC measurement.

In the polyolefin composition, the propylene random copolymer component (B) and the propylene homopolymer component (A) are preferably contained in the composition in a weight ratio of from 20:80 to 80:20, and more preferably from 30:70 to 70:30, and in embodiments in a ratio of from 40:60 to 60:40.

In accordance with the present invention, the polymer composition may comprise further additives, such as stabilizers (e.g. antioxidants and process stabilizers) as well as fillers and reinforcing agents, as known to the skilled person. Such additional components for the polymer compositions may be prepared in accordance with the technical teaching of the present invention, and may be employed in amounts suitable for the intended end use application, as is well known to the person skilled in the art. Typical additives are in particular nucleating agents, which may be selected among the known nucleating agents, including alpha- as well as beta-nucleating agents. These are added, if present in conventional amounts in order to further tailor the properties of the composition.

The above listed additives may be compounded with the polymer composition in a usual manner, as is well known to the person skilled in the art.

The present invention further provides a heterophasic polyolefin composition, comprising

(a) 65 to 99% by weight of the polyolefin composition as described above as the matrix phase, and
(b) 1 to 35-wt% of a rubber component dispersed in said matrix phase.

The term "heterophasic polyolefin composition" as used herein refers to a copolymer composition comprising a matrix phase and a dispersed phase.

The rubber component of the heterophasic polyolefin composition may be selected among typical rubbers, such as elastomeric polyolefins, styrenics, including SEBS, diene rubbers as well as copolymer rubbers comprising olefin monomers as well as non-conjugated diene monomers, such as EPDM and mixtures thereof. Preferred are copolymer rubbers comprising olefin monomers as well as non-conjugated diene monomers. More preferably, said rubber is selected from the group of copolymer rubbers comprising olefin monomers. Particularly preferred is an ethylene-propylene rubber (EPR). EPR materials may for example be synthesized in a final step of a multi-step process, where the first step is the synthesis of the matrix polymer, as will be outlined in more detail further below. Alternatively, said material may be mechanically blended with the matrix polymer in a separate melt blending step, as is well known to a person skilled in the art. The amount of the rubber component in the heterophasic composition typically is from 8 to 30-wt%, more preferably from 10 to 25-wt% and more preferably from 10 to 20-wt%, based on the total weight of the matrix phase and the dispersed (rubber) phase.

The matrix part of the heterophasic polyolefin composition provides the stiffness properties of the material, while the part of the random copolymer component (B) which is soluble in xylol (in the following referred to as XS fraction) is important for the impact properties and the optical properties of the composition.

Therefore, preferably, the total XS fraction of the propylene random copolymer component (B) is from 3 to 35-wt%, more preferably from 6 to 30-wt%, and even more preferred from 6 to 25-wt%.

The dispersed phase of the heterophasic polyolefin composition further exhibits an intrinsic viscosity (IV) of the AM fraction of 4 dl/g or less, with a preferred lower limit of 1 dl/g. A more preferred range is from 1.4 to 3.5 dl/g. If the IV is less than 1 dl/g, the impact properties are deteriorated. An IV within the desired range improves the optical properties, in particular haze, without sacrificing the impact properties. The present invention accordingly achieves a superior overall balance of properties, including conflicting properties, such as optical and impact properties.

The rubber component used in the heterophasic composition may be a rubber produced in a single stage reaction or it may be a rubber prepared in a reaction involving two or more stages. The rubber components produced in such a multi stage process, preferably two stage process, may be identical or may differ with respect to at least one property, such as comonomer content, AM content, IV of AM content. Such a rubber component may in particular be prepared using a sequence of gas phase reactors for producing the individual rubber components.

Typically, the rubber component or the rubber components have an AM content of 20-wt% or more, preferably 23 to 30-wt%. In the case of an EPR rubber component the ethylene content of the AM part of the rubber component is from 22 to 40, preferably 25 to 35-wt%. For such EPR rubber components the overall ethylene content typically amounts to from 25 to 60-wt%, based on the weight of the EPR component, preferably 30 to 60-wt%.

The heterophasic propylene copolymer may be prepared in any suitable manner known to the skilled person in the art, including mechanical compounding processes as well as sequential polymerization processes, the latter being preferred. Alternatively, the matrix phase may be prepared by suitable sequential polymerization processes, while the dispersed phase may either be introduced by compounding processes or by a further polymerization carried out in the presence of the already polymerized matrix phase.

More specifically, the present invention also provides a process for producing the above polymer composition, the process comprising the steps of:

- polymerizing propylene and optionally the comonomer as defined herein to form the propylene homopolymer component (A); and subsequently
- copolymerizing propylene and the at least one comonomer selected from the group consisting of ethylene and α-olefin monomers in the presence of propylene homopolymer component (A) to form the propylene random component (B).

In a preferred embodiment, the process is carried out in two different reactors, typically the component (A) is produced in a loop reactor (slurry polymerization), while component (B) is prepared in a subsequent gas phase reactor in the presence of component (A).

Preferably, the heterophasic polyolefin composition is a reactor made heterophasic propylene polymer, i.e. a reaction product which is obtained from a polymerization reaction by sequentially polymerizing the different components of the heterophasic polyolefin composition. Any polymerization method, including solution, slurry and bulk polymerization or gas phase polymerization may be used in any desired order. Bulk polymerization defines in the present application a polymerization in a reaction medium comprising at least 60 wt% monomer.

Below, a preferred process for preparing first the matrix phase of the heterophasic polyolefin composition is described in more detail, followed by a description of a process for the preparation of the dispersed phase.

The matrix phase of the heterophasic polyolefin composition may be prepared by polymerizing, in a slurry reactor, for example a loop reactor, propylene monomers, and if desired small amounts of comonomers, in the presence of a polymerization catalyst to produce the propylene homocopolymer component (A). Said component (A) is then transferred to a subsequent gas phase reactor, wherein in the gas phase reactor propylene monomers are reacted in the presence of suitably selected comonomers in order to produce the propylene random copolymer component (B) in the presence of the reaction product of the first step. This reaction sequence provides a reactor blend of components (A) and (B) constituting the matrix phase of the heterophasic polyolefin composition of the present invention.

It is of course possible that the first reaction is carried out in a gas phase reactor while the second polymerization reaction is carried out in a slurry reactor, for example a loop reactor. It is furthermore also possible to reverse the order of producing components (B) and (A), which has been described above in the order of first producing component (A) and then producing component (B).

The above-discussed process, comprising at least two polymerization steps, is advantageous since it provides easily controllable reaction steps, enabling the preparation of a desired reactor blend of the matrix phase of the heterophasic polyolefin composition. The polymerization steps may be adjusted, for example by appropriately selecting monomer feed, comonomer feed, hydrogen feed, temperature and pressure in order to suitably adjust the properties of the polymerization products obtained. For the preferred embodiments of component (B) it is in particular suitable to employ a comonomer/propylene ratio, preferably ethylene/propylene ratio of 30 to 60 mol/kmol during polymerization. Hydrogen feed in particular may be employed, as is known to the skilled person, to adjust the MFR value of a component produced in a given reactor.

Preferably the process comprises further polymerization stages, which again preferably are gas phase polymerisation steps, for producing the rubber component/rubber components in the presence of the matrix phase comprising the reactor made composition of component (A) and (B). During these further polymerization stages the properties of the rubber component may be adjusted in a manner known to the skilled person, such as hydrogen feed, reaction temperature or comonomer ratio. For the preferred embodiments of the rubber components it is in particular preferred to employ a ratio of ethylene/propylene of 400 to 600 mol/kmol during polymerization.

The process may be carried out using any suitable catalyst for the preparation of propylene monomers, including, Ziegler-Natta catalysts as well as single site catalysts (metallocene catalysts), preferably however a Ziegler-Natta catalysts, in particular a high yield Ziegler-Natta catalyst (so-called fourth and fifth generation type to differentiate from low yield, so-called second generation Ziegler-Natta catalysts). A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg-based catalyst component and typically the co-catalyst is an Al-alkyl based compound. Suitable catalysts are in particular disclosed in US 5,234,879, WO 92/19653, WO 92/19658 and WO 99/33843, incorporated herein by reference.

Other suitable catalysts are particulate catalysts as disclosed in WO 04/029112, incorporated herein by reference, as well as catalysts of this type described in WO 03/000754 and WO 03/000757, also incorporated herein by reference.

Preferred external donors are the known silane-based donors, such as dicyclopentyl dimethoxy silane (DONOR 1 in the examples) or cyclohexyl methyldimethoxy silane.

One specifically preferred embodiment of the process of the present invention is a loop-gas phase process, such as developed by Borealis, known as Borstar® technology, described for example in EP 0887379 A1 and WO 92/12182, incorporated herein by reference.

Such a process can be described as a first loop polymerization stage for producing component (A), followed by a first gas phase reactor for producing component (B) in the presence of component (A). Further subsequent gas phase reactors are provided for preparing the rubber component/rubber components in the presence of the matrix phase comprising (A) and (B).

Generally, the temperature for the reaction is from 40°C to 110°C, preferably between 60°C and 100°C, and in particular between 70°C and 90°C. The pressure is selected to be in the range of from 20 to 80 bar, preferably 30 to 60 bar, with the option of adding hydrogen in order to control the molecular weight. The reaction product of the slurry polymerization, which preferably is carried out in a loop reactor, is then transferred to the subsequent gas phase reactor, wherein the temperature preferably is within the range of from 50°C to 130°C, more preferably 60°C to 100°C, at a pressure in the range of from 5 to 50 bar, preferably 15 to 35 bar, again with the option of adding hydrogen in order to control the molecular weight.

The average residence time can vary in the reactor zones identified above. In embodiments, the average residence time in the slurry reaction, for example the loop reactor, is in the range of from 0.5 to 5 hours, for example 0.5 to 2 hours, while the average residence time in the gas phase reactor generally will be from 1 to 8 hours.

The properties of the matrix phase produced with the above-outlined process may be adjusted and controlled with the process conditions as known to the skilled person, for example by one or more of the following process parameters: temperature, hydrogen feed, comonomer feed, propylene feed, catalyst, type and amount of external donor, but not limited to these parameters.

In accordance with a further preferred embodiment of the present invention as indicated above, the obtained matrix phase is then transferred into a further reactor, preferably a gas phase reactor in order to polymerize a rubber component, preferably an EPR component, as the dispersed phase in the presence of the matrix phase.

This process yields a highly suitable reactor made heterophasic composition as defined herein, combining stiffness values of below 600 MPa (flexural modulus) with improved impact properties (Charpy and falling weight impact) and satisfactory optical properties. An example of such a preferred heterophasic polyolefin composition of the invention is a composition satisfying the following conditions:

Matrix phase:

Component (A): isotactic polypropylene

Component (B): Comonomer content greater than 5-wt%, MFR2 from 0.5, preferably 0.8 to 15 (g/10min) ratio of MFR2 of component (A)/component (B) greater than 5

Dispersed phase:

EPR rubber component, amount 10 to 20-wt% (based on weight of heterophasic composition, AM content of EPR from 23 to 30-wt%, ethylene content of AM 25 to 35-wt% and IV of AM from 1.4 to 3.5 (dl/g)

In the following, definitions and determination methods as used in the above descriptions and the examples will be given.

**MFR2** as described in the present invention is determined according to ISO 1133 (230°C, 2.16 kg load)

**The xylene soluble fraction (XS)** as defined and described in the present invention is determined as follows: 2.0 g of polymer are dissolved in 250 mm p-xylene at 135°C under agitation. After 30 minutes, the solution was allowed to cool for 15 minutes at ambient temperature and then allowed to settle for 30 minutes at $25 \pm 0.5$°C. The solution was filtered with filter paper into two 100 mm flask. The solution from the first 100 mm vessel was evaporated in nitrogen flow and the residue dried under vacuum at 90°C until constant weight is reached. Xylene soluble fraction (percent) can then be determined as follows:

$$\textbf{XS\% = (100 x } m_1 \textbf{ X } v_0)/(m_0 \textbf{ x } v_1),$$

wherein $m_0$ designates the initial polymer amount (grams), $m_1$ defines the weight of residue (grams), $v_0$ defines the initial volume (milliliter) and $v_1$ defines the volume of analyzed sample (milliliter).

The solution from the second 100 ml flask was treated with 200 ml of acetone under vigorous stirring. The precipitate was filtered and dried in a vacuum oven at 90°C. This solution can be employed in order to determine the amorphous part of the polymer (AM) using the following equation:

$$\textbf{AM\% = (100 x } m_1 \textbf{ X } v_0)/(m_0 \textbf{ x } v_1)$$

wherein $m_0$ designates the initial polymer amount (grams), $m_1$ defines the weight of residue (grams), $v_0$ defines the initial volume (milliliter) and $v_1$ defines the volume of analyzed sample (milliliter).

**The intrinsic viscosity (IV)** value is increasing with the molecular weight of a polymer. IV of AM: measured according to ISO 1628.

**Comonomer content** (weight percent) is determined in a known manner based on FTIR, calibrated with C13NMR.

**The melting temperature ($T_M$) and the crystallisation temperature ($T_{CR}$)** are measured with a Mettler TA820 differential scanning colorimetry device (DSC) on $3 \pm 0.5$ mg samples. Melting temperatures and crystallisation temperatures are obtained during 10°C/min cooling and heating scans between 30°C and 225°C. Melting temperatures and crystallisation temperatures were taken as the peaks of endotherms and exotherms.

**Charpy notched impact** is measured according to ISO 179 (room temperature, if not otherwise mentioned) and at -20°C using injection molded test specimen as described in EN ISO 1873-2 (80 x 10 x 4 mm).

**Tensile strength** is measured according to ISO 572-2 (cross head speed 50 mm/min).

**Tensile modulus** is measured according to ISO 572-2 (cross head speed 1 mm/min)

**Flexural modulus** is measured according to ISO 178, using injection molded test specimens as described in EN ISO 1873-2 (80 x 10 x 4 mm).

**Instrumented falling weight impact** is measured according to ISO 6603-2 with 2 mm thick injection molded plaques

**Examples**

All heterophasic compositions were obtained with the above-described process. The polymerization parameters and results are summarized below.

The compositions of the Examples 1 and 2 (E1, E2) and Comparative Examples 1 and 2 (CE1, CE2) were produced with a process as outlined above. In the Examples in accordance with the present invention, the matrix composition had an overall MFR2 of 33 and 32, respectively. The propylene homopolymer component (A) had a MFR2 of 100 and 115, respectively. The MFR2 of the propylene random copolymer component (B) was only about 8.

By contrast, while the matrix composition of the comparative examples had a MFR2 of 39 and 31, respectively, the propylene homopolymer component (A) however had a MFR2 of 32 and 31, respectively.

As may be seen from Table 1, the heterophasic compositions of the present invention have a much better stiffness/impact balance, as indicated by the Charpy values. Thus, when the propylene random copolymer component (B) has an MFR2 of not more than 10, and the propylene homopolymer component (A) has an MFR of at least 80, resulting in a MFR2 ratio (A)/(B) of above 5, superior stiffness/impact properties are obtained, as compared to heterophasic compositions wherein the MFR2 of both components is very similar to each other and thus similar to the overall MFR2 of the composition. Other properties, such as melting temperature and tensile properties are not affected.

With the present invention, soft heterophasic polyolefin compositions are provided having superior stiffness/impact properties while having a high melting temperature. Such compositions are especially suitable for the manufacture of films, molded articles, sheets, bottles, panels, foams, pipes and tubes.

An additional example (E3) and comparative example (CE3) were prepared and evaluated as indicated in Table 1. The results conform the superiority of the compositions in accordance with the present invention.

**Table 1**

| | CE1 | CE2 | E1 | E2 | | CE3 | E3 |
|---|---|---|---|---|---|---|---|
| Catalyst type | Commercial catalyst POLYTRAK™ by W.R.Grace & Co. (described in general in EP491566A2 / EP591224B1 / EP586390B1) | -> | -> | -> | | As described for examples 8 and 9 in WO04/029112 | -> |
| Donor type | DONOR 1 | -> | -> | -> | | DONOR 1 | |
| Al/Ti ratio (mol/mol) | 200 | 200 | 370 | 370 | | 220 | 180 |
| Al/donor ratio (mol/mol) | 10 | 10 | 5 | 5 | | 10 | 10 |
| Prepol Temperature (°C) | 30 | -> | -> | -> | | 30 | |
| **Loop** | | | | | | | |
| Temperature (°C) | 85 | -> | -> | -> | | 70 | 70 |
| Pressure (kPa) | 5400-5500 | -> | -> | -> | | -> | -> |
| H2/C3 ratio (mol/kmol) | 12 | 12 | 30 | 31 | | 2,3 | 1,6 |
| C2/C3 ratio (mol/kmol) | 0 | 0 | 0 | 0 | | 3,3 | 1 |
| Split % | 50 | 50 | 45 | 50 | | 43 | 40 |
| MFR2 (g/10 min) | 39 | 31 | 100 | 115 | | 6,5 | 7,6 |
| Ethene content (%) | 0 | 0 | 0 | 0 | | 2,8 | 1,0 |
| XS (%) | 1,9 | 1,7 | 1,8 | 1,2 | | 6,9 | 4,9 |
| **GPR1** | | | | | | | |
| Temperature (°C) | 85 | 85 | 80 | 80 | | 80 | 80 |
| Pressure (kPa) | 3300 | -> | -> | -> | | -> | -> |
| H2/C3 ratio (mol/kmol) | 160 | 160 | 120 | 125 | | 7 | 6 |
| C2/C3 ratio (mol/kmol) | 50 | 50 | 50 | 50 | | 32 | 45 |
| Split % | 50 | 50 | 55 | 50 | | 57 | 60 |
| MFR2 (g/10 min) | 31,5 | 31,1 | 33,0 | 31,9 | | 3,5 | 2,8 |
| XS (%) | 12,3 | 10,5 | 12,0 | 10,1 | | 8,7 | 15,4 |
| Matrix ethene content (wt%) | 4,0 | 3,9 | 3,7 | 3,7 | | 4,0 | 4,2 |
| **GPR2** | | | | | | | |
| Temperature (°C) | 80 | 80 | 80 | 85 | | 80 | 70 |
| Pressure (kPa) | 3000 | -> | -> | -> | | -> | -> |
| C2/C3 ratio (mol/kmol) | 500 | 500 | 500 | 500 | | 480 | 460 |
| H2/C2 ratio (mol/kmol) | 40 | 40 | 40 | 40 | | 470 | 450 |
| | | | | | | | |
| MFR2 (g/10 min) | 15 | 12 | 10 | 9,7 | | 3,4 | 2,9 |
| XS (%) | 25,5 | 30,5 | 27,3 | 31,0 | | 26,5 | 27,5 |
| AM (%) | 24,1 | 29 | 25,3 | 29 | | 25 | 26 |
| ethene of AM (%) | 33 | 35,8 | 31,8 | 32,6 | | 24,3 | |
| IV, viscosity of AM (dl/g) | 2,4 | 2,5 | 2,9 | 2,8 | | 1,5 | 1,5 |
| Total ethene content (%) | 10,5 | 11,3 | 10,1 | 13,3 | | 10,1 | 10 |
| Pellet MFR2 (g/10 min) | 15 | 12 | 16 | 9,4 | | 4,1 | 3,5 |

| | CE1 | CE2 | E1 | E2 | CE3 | E3 |
|---|---|---|---|---|---|---|
| MFR2 (g/10 min) | 15 | 12 | 16 | 9,4 | 4,1 | 3,5 |
| Matrix XS (w%) | 12,3 | 10,5 | 12,0 | 10,1 | 8,7 | 15,4 |
| Matrix ethylene (w%) | 4,0 | 3,9 | 3,7 | 3,7 | 4,0 | 4,2 |
| Matrix MFR(loop)/MFR(GPR1) | 1,4 | 1,0 | 7,1 | 11,5 | 3,0 | 5,1 |
| Total ethylene (w%) | 10,5 | 11,3 | 10,1 | 13,3 | 10,1 | 10 |
| Total XS (w%) | 25,5 | 30,5 | 27,3 | 31 | 26,5 | 27,5 |
| viscosity of AM (dl/g) | 2,4 | 2,5 | 2,9 | 2,8 | 1,5 | 1,5 |
| Tm (°C) | 164,8 | 164,7 | 164,7 | 164,8 | 138,8 | 154 |
| Tcr (°C) | 117,8 | 117,3 | 118,7 | 119,5 | 97,3 | 103 |
| Tensile stress at yield (MPa) | 17,1 | 15,5 | 16,8 | 15,2 | 15,7 | 15,8 |
| Tensile strain at yield (%) | 13,2 | 13,4 | 12,2 | 12,8 | 15,5 | 16,7 |
| Elongation of break (%) | 680 | 670 | 660 | 640 | 510 | 490 |
| Tensile modulus (Mpa) | 560 | 500 | 570 | 490 | 500 | 480 |
| Flexural modulus (MPa) | 515 | 450 | 530 | 470 | 440 | 420 |
| Charpy, notched, RT (kJ/m2) | 14,4 | 42,7 | 17,3 | 71,7 | 39 | 48,3 |
| Charpy, notched, 0 C (kJ/m2) | 3,8 | 5,2 | 5 | 7,1 | 9,5 | 10,4 |
| Charpy, notched, -20 C (kJ/m2) | 2 | 3,1 | 3 | 3,9 | 1,9 | 2 |
| Charpy, notched, -40 C (kJ/m2) | | | | | | |
| Instrumented falling weight impact -20 C, Total energy: Etot (J) | 24 | 32 | 31 | 31 | 32 | 32 |
| type/failure | d/br | ductile | duct-d/br | duct-d/br | duct-d/br | ductile |
| CaSt (ppm) | 1000 | 500 | 500 | 500 | 1000 | 1000 |
| Irganox B225 (ppm) | 3000 | 1500 | 1500 | 1500 | 400 | 400 |
| SHT (synthetic hydrotalcite) (ppm) | | | | | | |

## Claims

1. A polyolefin composition comprising:

   (a) propylene homopolymer component (A), and
   (b) a propylene random copolymer component (B) comprising repeating units derived from at least one comonomer selected from the group consisting of ethylene and α-olefin monomers,

   wherein the random propylene copolymer component (B) has an MFR2 of from 0.5 to 15, and wherein the propylene homopolymer component (A) may comprise up to 1-wt% of at least one comonomer selected from the group consisting of ethylene and α-olefin monomers, and wherein the MRF2 ratio of component (A)/component (B) is equal to or greater than 5.

2. The polyolefin composition of claim 1, wherein the melt flow rate MFR2 of the propylene random copolymer component (B) is from 0.8 to 10.

3. The polyolefin composition according to claim 1 or 2, wherein the melt flow rate MFR2 of the propylene homopolymer component (A) is at least 5.

4. The polyolefin composition of claim 1, 2 or 3, wherein the melt flow rate MFR2 of the propylene homopolymer component (A) is at least 80.

5. The polyolefin composition of any of claims 1 to 4, wherein the polyolefin composition has a melting temperature ($T_M$) of at least 150°C, wherein the melting temperature is the main melting peak in a DSC measurement.

6. The polyolefin composition of any of claims 1 to 5, wherein the polyolefin composition has a flexural modulus of not higher than 600 MPa.

7. The polyolefin composition of any of claims 1 to 6, wherein the $\alpha$-olefin comprises from 4 to 12 carbon atoms.

8. The polyolefin composition of any of claims 1 to 7, wherein the at least one comonomer is selected from the group consisting of ethylene, 1-butene, 1-pentene, 4-methyl-1-pentene, 1-hexene, 1-heptene and 1-octene.

9. The polyolefin composition of any of claims 1 to 8, wherein the propylene random copolymer component (B) is derived from propylene and ethylene or 1-butene.

10. The polyolefin composition of any of claims 1 to 9, wherein the propylene random copolymer component (B) is a propylene/ethylene copolymer.

11. The polyolefin composition of any of claims 1 to 10, wherein the amount of the at least one comonomer selected from the group of ethylene and $\alpha$-olefins in the propylene random copolymer component (B) is from 1 to 12-wt%, based on the total weight of the random propylene copolymer component (B).

12. The polyolefin composition of any of claims 1 to 11, wherein the amount of the at least one comonomer selected from the group of ethylene and $\alpha$-olefins is from 2 to 15-wt%, based on the total weight of the propylene random copolymer component (B).

13. The polyolefin composition of any of claims 1 to 12, wherein the amount of the at least one comonomer selected from the group of ethylene and $\alpha$-olefins in the component (B) is from 3 to 10-wt%, based on the total weight of the propylene random copolymer component (B).

14. The polyolefin composition of any of claims 1 to 13, wherein the comonomer for the component (A) is ethylene.

15. The polyolefin composition of any of claims 1 to 14, wherein the xylene soluble fraction (XS) of the propylene random copolymer component (B) is from 3 to 35-wt%.

16. The polyolefin composition of any of claims 1 to 15, wherein the propylene random copolymer component (B) and the propylene homopolymer component (A) are contained in the composition in a weight ratio of from 20:80 to 80:20.

17. A heterophasic polyolefin composition, comprising

     (a) 65 to 99-wt% of the polyolefin composition of any of claims 1 to 16 as the matrix phase, and
     (b) 1 to 35-wt% of a rubber component dispersed in the matrix phase.

18. The heterophasic polyolefin composition of claim 17, wherein the rubber component is an ethylene-propylene rubber (EPR).

19. The heterophasic polyolefin composition of claim 17 or 18, wherein the rubber component has a xylene soluble fraction (XS) of above 12-wt%.

20. A process for producing the polymer composition of any of claims 1 to 16, comprising the steps of:

- polymerizing propylene to form the propylene homopolymer component (A); and subsequently
- copolymerizing propylene and at least one comonomer selected from the group consisting of ethylene and α-olefin monomers in the presence of the propylene homopolymer component (A) to form the propylene random component (B).

21. The process of claim 20, wherein the polymerization of the propylene homopolymer component (A) and the copolymerization of the propylene random copolymer component (B) is carried out in two different reactors.

22. A process for producing the heterophasic polyolefin composition of any of claims 17 to 19, comprising the step of compounding the polymer composition of any of claims 1 to 16 with a rubber component, or comprising the steps of compounding component (A) with component (B) followed by compounding the obtained mixture with the rubber component, or the step of polymerizing the rubber component in the presence of the polymer composition according to any of claims 1 to 16.

23. An article comprising the polymer composition of any of claims 1 to 16 or 17 to 19.

**European Patent Office**

## EUROPEAN SEARCH REPORT

Application Number

EP 07 01 3623

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 681 315 A (BOREALIS POLYMERS OY [FI]) 19 July 2006 (2006-07-19) * abstract; claims 1-32 * * page 7, paragraph 74 * | 1-23 | INV. C08L23/10 C08L23/14 C08L23/16 |
| X | EP 1 788 023 A (BOREALIS TECH OY [FI]) 23 May 2007 (2007-05-23) * abstract; claims 1-11 * * page 3, paragraph 15 - paragraph 22 * | 1-3, 5-16,23 | |
| X | WO 2006/065649 A (EXXONMOBIL CHEM PATENTS INC [US]; MEHTA ASPY K [US]; LI WEN [US]; DATT) 22 June 2006 (2006-06-22) * abstract; claims 1-34 * * pages 9,12,19 * | 1-16,23 | |
| D,X | WO 98/59002 A (BOREALIS AS [DK]; PITKANEN PAIVI [FI]; MALM BO [FI]; KAUNO ALASTALO [F] 30 December 1998 (1998-12-30) * abstract; claims 1-25 * | 1,17,20, 21,23 | |
| X | EP 1 373 403 A (BOREALIS TECH OY [FI]) 2 January 2004 (2004-01-02) * abstract; claims 1-11 * * page 2, paragraph 6-10 * * page 3, paragraphs 14,15,24 * * page 4, paragraph 28 * | 1,17-21, 23 | TECHNICAL FIELDS SEARCHED (IPC) C08L |

The present search report has been drawn up for all claims

| Place of search | Date of completion of the search | Examiner |
|---|---|---|
| The Hague | 13 November 2007 | Bergmans, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 07 01 3623

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2007

| Patent document cited in search report | | Publication date | Patent family member(s) | | Publication date |
|---|---|---|---|---|---|
| EP 1681315 | A | 19-07-2006 | WO | 2006074930 A1 | 20-07-2006 |
| EP 1788023 | A | 23-05-2007 | WO | 2007057224 A1 | 24-05-2007 |
| WO 2006065649 | A | 22-06-2006 | CA | 2587629 A1 | 22-06-2006 |
| | | | EP | 1828303 A1 | 05-09-2007 |
| WO 9859002 | A | 30-12-1998 | AT | 256714 T | 15-01-2004 |
| | | | AU | 8121198 A | 04-01-1999 |
| | | | BR | 9810290 A | 19-09-2000 |
| | | | CN | 1261390 A | 26-07-2000 |
| | | | DE | 69820626 D1 | 29-01-2004 |
| | | | DE | 69820626 T2 | 09-06-2004 |
| | | | EP | 0991719 A1 | 12-04-2000 |
| | | | ES | 2209159 T3 | 16-06-2004 |
| | | | JP | 2002508013 T | 12-03-2002 |
| | | | US | 6342564 B1 | 29-01-2002 |
| EP 1373403 | A | 02-01-2004 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 991719 A
- EP 0894102 A2
- EP 0785954 A2
- EP 1270628 A2
- EP 0277514 A2
- US 5234879 A
- WO 9219653 A
- WO 9219658 A
- WO 9933843 A
- WO 04029112 A
- WO 03000754 A
- WO 03000757 A
- EP 0887379 A1
- WO 9212182 A